# EUROPEAN PATENT APPLICATION

(11) **EP 4 119 440 A1**
(43) Date of publication of application: **18.01.2023**
(21) Application number: 21275096.2
(22) Date of filing: 16.07.2021
(51) Int. Cl.: B64C 9/00, B64C 13/26, B64C 3/50

(54) **CONTROL SURFACE ACTUATION**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention provides a vehicle having a main body, a control surface pivotably coupled to the main body for changing the direction of travel of the vehicle, and an actuation system for driving a vehicle control surface to articulate about the pivot point. The actuation system comprises: at least one pair of extensible coupling members, each one of the pair of extensible coupling members comprising a shape memory alloy; and a heating system. The heating system is arranged to heat a first one of the extensible coupling members or a second one of the extensible coupling members in response to a vehicle control input received by the actuation system, wherein, when respectively heated, the first one or the second one of the extensible coupling members cause the control surface to articulate in the opposite direction to the other. The present invention also provides a method of actuating a control surface of a vehicle.

## Description

### FIELD

The present disclosure relates to a vehicle having an actuation system for articulating a control surface of the vehicle, and a method of actuating a vehicle control surface.

### BACKGROUND

Fixed wing aircraft have various control surfaces, such as flaps, rudders, spoilers, ailerons and flaperons. These control surfaces are actuated by means of a hydraulic system that drives actuators. Not only are these hydraulic systems heavy, but they, at least in part, occupy real estate inside the aircraft's structure. This real estate could be better occupied by fuel. Further, the actuators themselves are typically disposed on the outside surface of the wing in fairings, which increases the aerodynamic drag on the aircraft.

Therefore, there is a need for a more discrete apparatus for actuating a control surface.

### SUMMARY

According to an aspect of the present invention, there is provided a vehicle having a main body, a control surface pivotably coupled to the main body for changing the direction of travel of the vehicle, and an actuation system for driving the control surface to rotate relative to the main body, the actuation system comprising:
at least one pair of extensible coupling members, each one of the extensible coupling members in the pair comprising a shape memory alloy; and
a heating system arranged to selectively heat a first one of the extensible coupling members or a second one of the extensible coupling members in response to a vehicle control input received by the actuation system, wherein, when respectively heated, the first one or the second one of the extensible coupling members cause the control surface to articulate in the opposite direction to the other.

Advantageously, the actuation system for the vehicle requires fewer moving parts than those known in the art, and therefore tends to more compact and have reduced weight. By being made more compact, the actuation system can be arranged inside a vehicle body, and therefore drag on the vehicle is reduced relative to examples where parts of the actuation system are arranged outside the body of the vehicle.

The at least one pair of extensible coupling members may be for directly or indirectly coupling the control surface to the main body.

A first end of the first extensible coupling member may be coupled to an upper side of the control surface and a second end of the first extensible coupling member may be coupled to the main body on a first side of a horizontal plane through the main body, and
a first end of the second extensible coupling member may be coupled to a lower side of the control surface and a second end of the second extensible coupling member may be coupled to the main body on a second side of the horizontal plane,
such that, when heated, the first extensible coupling member contracts and pulls the upper side of the control surface towards the upper side of the main body thereby causing the control surface to rotate about a pivot point, and such that, when heated, the second extensible coupling member contracts and pulls the lower side of the control surface towards the lower side of the main body thereby causing the control surface to rotate about the pivot point.

Each extensible coupling member may comprise a planar structure arranged between the main body and the control surface, and arranged conformably with a skin of the main body and a skin of the control surface.

The vehicle may comprise an pivoting structure having a pivot point, the pivoting structure being for mechanically coupling the main body to the control surface,
a first end of the first extensible coupling member may be coupled to a first end of the pivoting structure and a second end of the first extensible coupling member may be coupled to the main body on a first side of an axis through the pivoting structure, and
a first end of the second extensible coupling member may be coupled to the first end of the pivoting structure and a second end of the second extensible coupling member is coupled to the main body on a second side of an axis through the pivoting structure,
such that, when heated, the first extensible coupling member contracts and pulls the pivoting structure towards the upper side of the main body thereby causing the control surface to rotate about the pivot point, and such that, when heated, the second extensible coupling member contracts and pulls the pivoting structure towards the lower side of the main body thereby causing the control surface to rotate about the pivot point.

The pivoting structure may comprise an elongate beam.

The vehicle may comprise a plurality of pairs of extensible coupling members, first extensible coupling members in a first pair being woven with first extensible coupling members in a second pair, and second extensible coupling members in the first pair being woven with second extensible coupling members in the second pair.

The heating system may comprise at least one heating element disposed at the second end of each extensible coupling member.

The heating system may comprise:
a heating element arranged to heat a fluid;
a plurality of ducts for transporting the fluid; and
at least one valve for selectively directing the fluid through each duct, wherein a portion of each duct is arranged proximate to the second end of a respective extensible coupling member such that the respective extensible coupling member is heated when heated fluid is directed through a duct having a portion proximate thereto.

The or each heating element may comprise an electrically resistive heating element. Alternatively, the or each heating element may be a chemical heating element, such as one that undergoes an exothermic reaction. Alternatively, the heating element may comprise a jet engine.

The heating system may comprise a power source for driving the heating element to generate heat. The power source may comprise a photovoltaic cell or a battery. The heating system may comprise an exhaust bleed of a jet engine.

Each extensible coupling member may comprise a tubular mesh of shape memory alloy fibres. Alternatively, each extensible coupling member may comprise a cable comprising a plurality of woven shape memory alloy fibres. Alternatively again, each extensible coupling member may comprise a block of shape memory alloy material, such as in the form of a rod.

The shape memory alloy may comprise Nitinol.

The actuation system may comprise a processor configured to:
receive a vehicle control input; and
transmit a control signal to the heating system to heat the first extensible coupling member or the second extensible coupling member in response to the control input.

The vehicle may comprise a cooling system for respectively cooling each of the extensible coupling members. The cooling system may comprise a sealed unit comprising at least part of the at least one pair of extensible coupling members and a non-conductive fluid. The cooling system may comprise an air conditioning system. The cooling system may comprise a refrigeration system.

The vehicle may be an aircraft. Alternatively, the vehicle may be a car, a naval vessel or a spacecraft. The main body may be an aircraft wing. The main body may be a horizontal tail plane. The control surface may be one of a flap, aileron, slat, flaperon, elevator or rudder.

According to another aspect of the present invention, there is provided a method of actuating a control surface coupled to a vehicle according to any one of the preceding claims, comprising:
receiving a vehicle control input; and
in response to the vehicle control input, selectively heating a first one or a second one of a pair of extensible coupling members, each comprising a shape memory alloy, to cause the control surface to rotate relative to a main body of the vehicle having the control surface.

The method may comprise selectively cooling the first extensible coupling member or the second extensible coupling member in the pair of extensible coupling members.

It will be appreciated that features described in relation to one aspect of the present disclosure can be incorporated into other aspects of the present disclosure. For example, an apparatus of the disclosure can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the disclosure will now be described by way of example only and with reference to the accompanying drawings, in which:
Figure 1 is a cross-sectional view through an aircraft wing having a control surface articulated by actuators according to an embodiment;
Figures 2a and 2b are cross-sectional views through an aircraft wing having a control surface articulated by actuators according to another embodiment;
Figure 3 is a cross-sectional view through an aircraft wing having a control surface articulated by actuators according to another embodiment;
Figure 4 is a systematic view of an actuation system according to an embodiment;
Figure 5a shows a top view of an aircraft wing according to one embodiment; and
Figure 5b shows a top view of an aircraft wing according to another embodiment.

For convenience and economy, the same reference numerals are used in different figures to label identical or similar elements.

### DETAILED DESCRIPTION

Generally, embodiments herein relate to actuators for vehicle control surfaces, particularly but not exclusively aircraft control surfaces. These actuators comprise pairs of shape memory alloy structures, each actuator being respectively for pulling the control surface in a different direction to the other in the same pair. The structures may be cables, a plurality of cables, a mesh, or a planar surface. The structures may be formed of a plurality of shape memory alloy fibres. A heating system is used to return the actuators to their original shape. In one embodiment, the actuators form a skin between a vehicle body (e.g. the trailing edge of a wing box or other structure to which a control surface is attached) and the control surface. In another embodiment the actuators take the form of rods which respectively pull on a beam, which acts as a lever, extending between the vehicle body and the control surface.

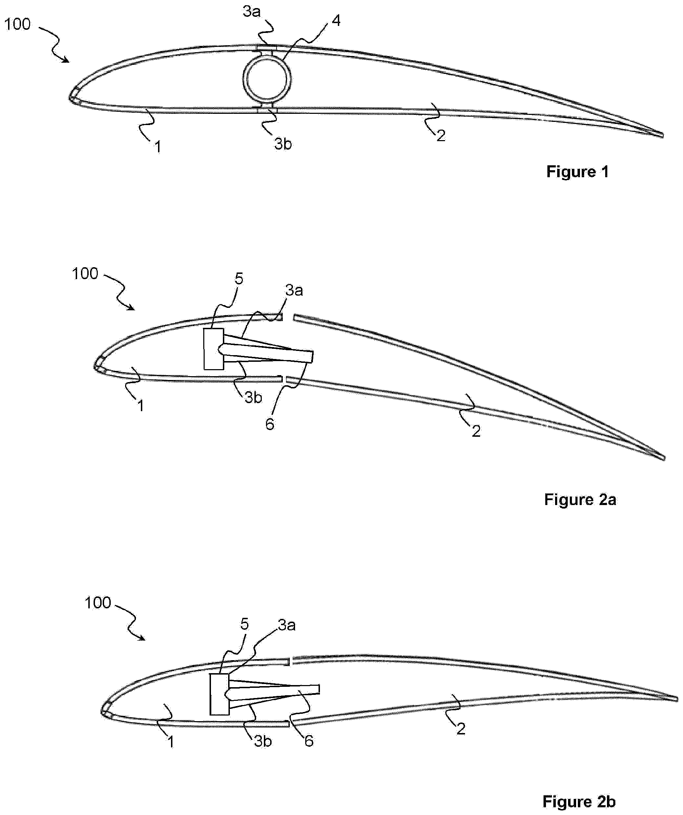

Figure 1 shows a cross-sectional view through an aircraft wing 100 according to an embodiment. The aircraft wing 100 comprises a wing box 1 having a leading edge and a trailing edge, where leading and trailing (i.e. front and rear) are defined relative to the direction of travel of an aircraft to which the wing 100 is attached. A control surface 2 is coupled to the trailing edge of the wing box 1, such that the control surface 2 can rotate up and down relative to the dorsal plane (i.e. horizontal plane) of the wing box 1.

In the illustrated embodiment, the surface (i.e. skin) of the wing box 1 is directly coupled to the surface (i.e. skin) of the control surface 2 by at least one pair of conformal actuators 3. The pair of actuators 3 comprise an upper actuator 3a and a lower actuator 3b. In other words, the actuators 3a, 3b (generally, 3) match the contour of the trailing edge of the wing box 1 and the leading edge of the control surface 2, such that they effectively provide an extension of those surfaces.

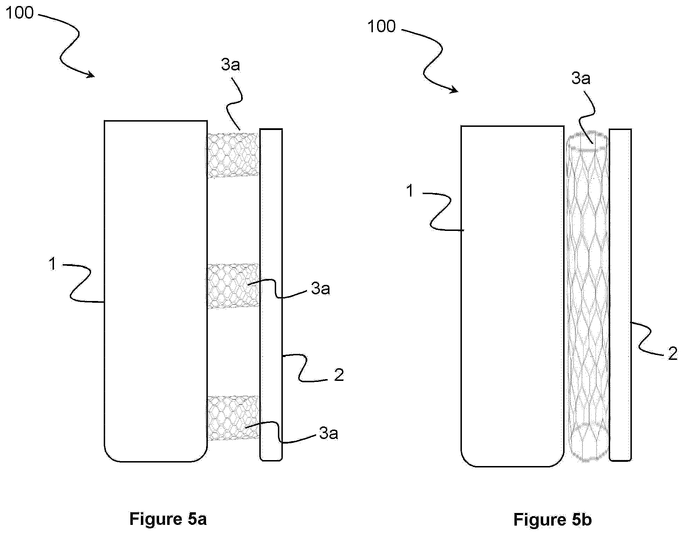

Examples of the form these actuators 3 may take are shown in Figures 5a and 5b. In the embodiment of Figure 5a, the control surface 2 is coupled to the wing box 1 by a plurality of pairs of actuators 3 (where only the upper actuators 3a of each pair are shown). Three pairs of actuators 3 are illustrated in the example, but this is not intended to be limiting. Each actuator 3 in the pair is in the form of a hollow mesh (or net) tube of shape memory alloy fibres. One end of each tubular actuator 3 is connected to the trailing edge of the wing box 1, and the other end is connected to the leading edge of the control surface 2. Alternatively, each actuator 3 may take the form of a solid (i.e. filled) rod of shape memory alloy material. For example, each actuator 3 may take the form of a cable comprising strands of woven shape memory alloy fibres.

While only three pairs of actuators 3 are illustrated in Figure 5a, in reality there may be hundreds or even thousands of such actuators 3. The actuators 3 may cross each other in a knit mesh (i.e. weave). Advantageously, the actuators 3 being arranged in a knit mesh tends to increase the reliability of the actuation system compared to using a single cable. Each actuator 3 may comprise a mesh having thousands of fibres (strands), so that if one or two fibres snap due to fatigue there would still be thousands remaining to enable effective actuation of the control surface 2. In one example, half the actuator 3 could be lost before actuation force falls below that required to move the control surface 2. The greater the number of shape memory alloy fibres, the greater the force the actuator 3 is able to exert on the control surface 2.

Therefore, the actuators 3 herein described are particularly advantageous where an aircraft is flying in a hostile environment where it could suffer damage, for example from small arms fire.

Figure 5b illustrates a single pair of actuators 3 extending between the wing box 1 and the control surface 2, across the full length of the control surface 2. Here, again only the upper actuator 3a in the pair is shown. Each actuator 3 takes the form of an elongate hollow mesh (or net) tube of shape memory alloy fibres. The tubular actuator 3 is arranged such that one side is connected to the trailing edge of the wing box 1, and the other side is connected to the leading edge of the control surface 2. Alternatively, each actuator 3 in the pair may be planar. In other words, each actuator 3 may be a solid sheet of shape memory alloy material extending between the wing box 1 and the control surface 2. In another example, the actuators 3 do not extend across the full length of the control surface 2.

The upper actuator 3a is coupled to an upper surface of the wing box 1, and the lower actuator 3b is coupled to a lower surface of the wing box 1. The lower surface is that which faces the ground when the aircraft to which the wing box 1 is attached is flying straight and level in normal flight. The upper actuator 3a and lower actuator 3b are of substantially the same form as each other.

Shape memory alloys are those which are deformable at a first temperature, but return to their original shape at a second temperature. Nitinol and Ag-Cd 44/49 are examples of a shape memory alloy, among others, and that which is selected depends on the variation in length per change in degree in temperature that is required for a particular application. For example, the shape memory alloy is chosen such that an actuator 3 becomes readily deformable when cooled (or at ambient temperature), and as such can be stretched. When heated, the actuator 3 contracts to its natural shape. Therefore, when an actuator 3 is heated, it pulls on the respective part of the control surface 2 in order to rotate the control surface 2 relative to the wing box 1 to which it is rotatably coupled.

In another embodiment, the actuators 3 may be connected to a cable pulley system to further reduce height. By wrapping the actuators 3 around pulley wheels, a longer extension/contraction of the actuator 3 can be achieved. This tends to provide a greater movement (i.e. deflection) of the control surface 2 for less applied force. In an embodiment, the pulley wheels are provided with the heating elements 9 to selectively heat the actuators 3 wrapped around them, thereby causing the contraction of the actuators 3.

The control surface 2 is rotatably coupled to the wing box 1 by way of a hinge 4 (i.e. pivot point). The hinge 4 may take the form of an elongate cylindrical rod. In one embodiment, other components of the actuation system, such as a processor and heating element, are disposed inside the hinge 4. The hinge 4 is disposed inside the wing 100, between the upper actuator 3a and lower actuator 3b.

While an aircraft wing box 1 is illustrated, the skilled person would appreciate the present invention is equally applicable to any vehicle body having a control surface 2 coupled thereto. For example, instead of a wing box 1, the vehicle body may be a horizontal stabiliser of an aircraft; a fin, diving plane or canard on a submarine; or the rear wing of a racing car. To that end, the control surface 2 may be an aileron, flaperon, rudder, flap, slat, elevator, drag reduction system, or air brake.

Figures 2a and 2b show cross-sectional views through an aircraft wing 100 having actuators 3 according to another embodiment, and together Figures 5a and 5b illustrate the operation of an actuation system to articulate a control surface 2.

The aircraft wing 100 comprises a wing box 1 (i.e. main body) and control surface 2 as described with reference to Figure 1. The control surface 2 is arranged to pivot relative to the wing box 1 of the wing 100.

Further, the wing 100 comprises a fixed member 5 disposed inside the wing box 1. A coupling member 6 is arranged to pivotably engage therewith. The coupling member 6 is be a beam or strut arranged to protrude from the leading edge of the control surface 2. The coupling member 6 may be planar and extend along the length of the control surface 2. The coupling member 6 may be integrally formed with the control surface 2.

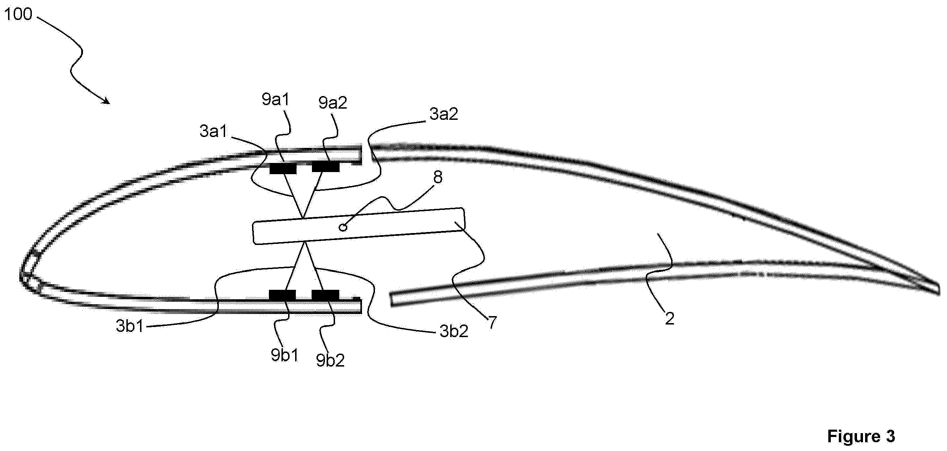

The wing 100 comprises an actuation system having heating elements 9 and a controller 8 as will be described with reference to Figure 3. In this embodiment, the fixed member 5 comprises the heating elements 9 arranged to heat respective actuators 3. The upper actuator 3a extends from an upper part of the fixed member 5 to an upper part of the coupling member 6, at its distal end. The lower actuator 3b extends from a lower part of the fixed member 5 to a lower part of the coupling member 6, at its distal end.

Figure 2a illustrates the control surface 2 in a depressed position (i.e. trailing edge pointing towards the ground). Here, the lower actuator 3b has been heated to cause its contraction, while the upper actuator 3a is not heated so as to freely extend (i.e. stretch). This causes the coupling member 6 to rotate about the pivot point in the fixed member 5 towards the lower actuator 3b. As the coupling member 6 is fixed to the control surface 2, the control surface therefore rotates downwards relative to the dorsal plane of the wing 100.

Figure 2b illustrates the control surface 2 in a raised position. Here, the upper actuator 3a has been heated to cause its contraction, while the lower actuator 3b is not heated so as to stretch. This causes the coupling member 6 to rotate about the pivot point in the fixed member 5 towards the upper actuator 3a. As the coupling member 6 is fixed to the control surface 2, the control surface 2 therefore rotates upwards relative to the dorsal plane of the wing 100.

Figure 3 illustrates another example of a wing 100 actuated by apparatus according to an embodiment. Here, two pairs of actuators 3 are provided. In other words, two upper actuators 3a1, 3a2 and two lower actuators 3b1, 3b2 are provided. Each of the pairs of actuators 3 may be arranged in the form of criss-cross or truss of shape memory alloy fibres on opposing sides of a neutral axis.

Each actuator 3 is arranged to pull, when heated, on a pivoting structure 7 coupling the wing box 1 to the control surface 2. The pivoting structure 7 comprises a pivot point 8 along the neutral axis. The pivot point 8 may be a transverse rod extending through substantially the length of the wing 100. The pivoting structure 7 may be an elongate beam, with its longitudinal axis arranged perpendicularly to the longitudinal axis of the wing box 1. The pivoting structure 7 may be integrally formed with the control surface 2.

Each actuator 3a1, 3a2, 3b1, 3b2 is provided with a respective heating element 9a1, 9a2, 9b1, 9b2 (collectively 9). The heating elements 9 are coupled to an inside surface of the wing box 1. Therefore, one end of each actuator 3a1, 3a2, 3b1, 3b2 is placed in contact with, or in proximity to, a respective heating element 9a1, 9a2, 9b1, 9b2. While one heating element 9 is shown being provided per actuator 3, other embodiments provide a heating element 9 for each end of each actuator 3, or one heating element 9 shared between a pair of actuators 3a, 3b. A plurality of pairs of actuators 3a, 3b may extend along the axis of rotation of the pivoting structure 7.

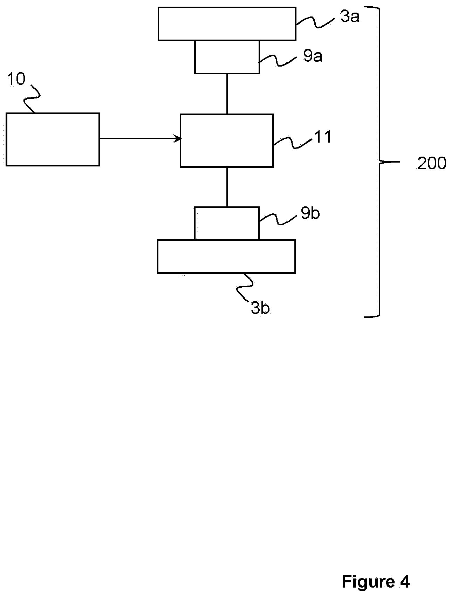

Figure 4 illustrates a systematic view of an actuation system 200 according to an embodiment, for controlling the actuators 3 described with reference to previous embodiments. Here, each actuator 3a, 3b is associated with a respective heating element 9a, 9b (generally, 9). Each heating element 9a, 9b is arranged to selectively heat a respective actuator 3a, 3b to return it to its normal, shorter, length. The heating elements 9 are, for example, electrical resistors which heat up as a current is applied across them. The skilled person would naturally be aware of other forms of heating elements 9 that can be controlled to selectively provide heat to a shape memory alloy structure, such as chemical heating elements.

While the heating elements 9 are shown and described as self-contained heating devices, in other embodiments there may be a single heating element with a means to selectively drive heat proximate to the ends of respective actuators 3. In other words, the heating elements 9 may be part of a wider heating system. For example, there may be a single heat source for heating fluid in an arrangement of pipes, where each pipe comprises a heat exchanger arranged proximate to a respective actuator 3. The heat source may be a jet engine having an exhaust bleed, with the exhaust gases being the aforementioned fluid. A switch (i.e. valve) may direct heated fluid from the region of the heat source to a heat exchanger in the region of a respective actuator 3.

The heating system may comprise a power source, such as a battery, hydrogen cell, photovoltaic cell, or other means to provide power to the heating elements 9 to cause them to generate heat.

In some embodiments, a cooling system is also present to cool the actuators 3, such that they can be made readily extendable. While such a cooling system is advantageous at low altitudes, the ambient temperature above -10,000 metres in altitude is such that the actuators 3 will cool quickly if not actively heated. For example, a cooling system may constantly cool a bay in which the actuation system 2 is disposed, such that the actuators 3 readily return to ambient temperature when the respective heating elements 9 are deactivated. The cooling system may comprise the actuators 3 being installed in a sealed chamber comprising a non-conductive fluid, such as water. The non-conductive fluid dissipates the heat provided by the heating elements 9 when not activated. The cooling system may alternatively comprise a refrigeration system comprising pipes in close proximity to the actuators 3, comprising refrigerant for drawing heat away from the actuators 3. Heat exchangers may be disposed in the surface of the wing 100, to which the pipes connect.

In use, a controller 11 receives a control signal from a user input 10. The user input 10 is, for example, a cockpit control (e.g. a yoke, lever, or joystick) for a manned aircraft or remote pilot input for an unmanned aerial vehicle. The user input 10 receives a command to change the direction of travel of a vehicle, such as an aircraft. For example, the user input 10 is manipulated to control the pitch or roll of an aircraft. The user input 10 generates a control signal representative of the user command.

The controller 11 processes the control signal and generates its own control signal in response, for controlling the respective heating element 9. For example, if a "roll to port" input is received from the user input 10, the controller 11 generates a control signal that will raise the aileron 2 on the port wing 100. Therefore, the controller 11 will control the upper heating element 9a to heat the upper actuator 3a, in order to contract it. The controller 11 will not control the lower heating element 9b to heat the lower actuator 3b, such that it remains malleable and can therefore easily stretch.

The controller 11 may take any suitable form. For instance, it may be a microcontroller, plural microcontrollers, a processor, or plural processors, for implementing instructions and using data, including instructions and data in the form of a computer program or plurality of computer programs stored in or on a machine readable storage medium such as computer memory, a computer disk, ROM, PROM etc., or any combination of these or other storage media.

The actuation system 200 may comprise a deflection sensor, electrically coupled to the controller 11, for measuring the deflection of the control surface 2. The deflection sensor may be coupled to the wing 100 having the control surface 2. When the deflection of the control surface 2 reaches a threshold deflection value, for example three degrees less than the desired deflection value (as input by a pilot), the controller 11 controls the respective heating element 9 to stop heating the actuator 3 being contracted. This is due to cooling, and therefore extension, not taking place immediately and therefore the control surface 2 continuing to deflect after heating ceases. In other words, the actuation system 200 may comprise a feedback loop.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments. Singular references do not exclude a plurality; thus, references to 'a', 'an', 'first', 'second', etc. do not preclude a plurality.

## Claims

1. A vehicle having a main body, a control surface pivotably coupled to the main body for changing the direction of travel of the vehicle, and an actuation system for driving the control surface to rotate relative to the main body, the actuation system comprising:
at least one pair of extensible coupling members, each one of the extensible coupling members in the pair comprising a shape memory alloy; and
a heating system arranged to selectively heat a first one of the extensible coupling members or a second one of the extensible coupling members in response to a vehicle control input received by the actuation system, wherein, when respectively heated, the first one or the second one of the extensible coupling members cause the control surface to articulate in the opposite direction to the other.

2. The vehicle according to claim 1, wherein a first end of the first extensible coupling member is coupled to an upper side of the control surface and a second end of the first extensible coupling member is coupled to the main body on a first side of a horizontal plane through the main body, and
wherein a first end of the second extensible coupling member is coupled to a lower side of the control surface and a second end of the second extensible coupling member is coupled to the main body on a second side of the horizontal plane,
such that, when heated, the first extensible coupling member contracts and pulls the upper side of the control surface towards the upper side of the main body thereby causing the control surface to rotate about a pivot point, and such that, when heated, the second extensible coupling member contracts and pulls the lower side of the control surface towards the lower side of the main body thereby causing the control surface to rotate about the pivot point.

3. The vehicle according to claim 2, wherein each extensible coupling member comprises a planar structure arranged between the main body and the control surface, and arranged conformably with a skin of the main body and a skin of the control surface.

4. The vehicle according to claim 1, comprising pivoting structure having a pivot point, the pivoting structure being for mechanically coupling the main body to the control surface,
wherein a first end of the first extensible coupling member is coupled to a first end of the pivoting structure and a second end of the first extensible coupling member is coupled to the main body on a first side of an axis through the pivoting structure, and
wherein a first end of the second extensible coupling member is coupled to the first end of the pivoting structure and a second end of the second extensible coupling member is coupled to the main body on a second side of an axis through the pivoting structure,
such that, when heated, the first extensible coupling member contracts and pulls the pivoting structure towards the upper side of the main body thereby causing the control surface to rotate about the pivot point, and such that, when heated, the second extensible coupling member contracts and pulls the pivoting structure towards the lower side of the main body thereby causing the control surface to rotate about the pivot point.

5. The vehicle according to any one of the preceding claims, wherein the heating system comprises at least one heating element disposed at the second end of each extensible coupling member.

6. The vehicle according to claim 5, wherein the heating system comprises a power source for driving each heating element to generate heat.

7. The vehicle according to any one of claims 1 to 4, wherein the heating system comprises:
a heating element arranged to heat a fluid;
a plurality of ducts for transporting the fluid; and
at least one valve for selectively directing the fluid through each duct,
wherein a portion of each duct is arranged proximate to the second end of a respective extensible coupling member such that the respective extensible coupling member is heated when heated fluid is directed through a duct having a portion proximate thereto.

8. The vehicle according to claim 7, wherein the heating element is a jet engine.

9. The vehicle according to any one of claims 5 to 7, wherein the or each heating element comprises an electrically resistive heating element.

10. The vehicle according to any one of the preceding claims, wherein each extensible coupling member comprises a tubular mesh of shape memory alloy fibres.

11. The vehicle according to any one of the preceding claims, wherein the shape memory alloy comprises Nitinol.

12. The vehicle according to any one of the preceding claims, wherein the actuation system comprises a processor configured to:
receive a vehicle control input; and
transmit a control signal to the heating system to heat the first extensible coupling member or the second extensible coupling member in response to the control input.

13. The vehicle according to any one of the preceding claims, comprising a cooling system for cooling each of the extensible coupling members.

14. The vehicle according to any one of the preceding claims, wherein the vehicle is an aircraft.

15. A method of actuating a control surface coupled to a vehicle according to any one of the preceding claims, comprising:
receiving a vehicle control input; and
in response to the vehicle control input, selectively heating a first one or a second one of a pair of extensible coupling members, each comprising a shape memory alloy, to cause the control surface to rotate relative to a main body of the vehicle having the control surface.
